# EUROPÄISCHE PATENTSCHRIFT

(11) **EP 2 711 880 B1**
(45) Veröffentlichungstag und Bekanntmachung des Hinweises auf die Patenterteilung: **23.06.2021**
(21) Anmeldenummer: 12185761.9
(22) Anmeldetag: 24.09.2012
(51) Int. Cl.: G06Q 10/08

(54) **Verfahren und Vorrichtung zur Kommissionierung von Waren in einem Warenlager**
Method and device for picking goods in a warehouse
Procédé et dispositif destinés au commissionnement de marchandises dans un entrepôt

(43) Veröffentlichungstag der Anmeldung: 26.03.2014
(73) Patentinhaber: KNAPP Systemintegration GmbH, 8700 Leoben (AT)
(72) Erfinder: Lebernegg, Gregor, 8051 Graz (AT); Schoster, Harald, 8712 Proleb (AT); Lischka, Jürgen, 96123 Litzendorf (DE)
(74) Vertreter: Wirnsberger, Gernot

(56) Entgegenhaltungen:
- EP-A1- 2 161 219
- WO-A1-2011/085426
- WO-A2-03/096052
- DE-A1-102004 001 198
- RUPERT REIF ET AL: "Augmented & Virtual Reality applications in the field of logistics", THE VISUAL COMPUTER ; INTERNATIONAL JOURNAL OF COMPUTER GRAPHICS, SPRINGER, BERLIN, DE, Bd. 24, Nr. 11, 27. August 2008 (2008-08-27), Seiten 987-994, XP019656368, ISSN: 1432-2315, DOI: 10.1007/S00371-008-0271-7
- None

## Beschreibung

Die Erfindung betrifft ein Verfahren zur Kommissionierung von Waren in einem Warenlager, wobei zumindest eine Auftragsliste abgearbeitet wird und wobei zumindest ein Kommissionierer mit einer tragbaren mobilen Einheit mit einer optischen Anzeigeeinrichtung ausgestattet ist und von zumindest einem Kommissionierer manuell Waren aus dem Warenlager auf eine Palette zumindest eines fahrerlosen Transportfahrzeuges in Form eines Stapels gestapelt werden.

Des Weiteren betrifft die Erfindung eine Vorrichtung zur Kommissionierung von Waren in einem Warenlager gemäß zumindest einer Auftragsliste, insbesondere einem Verfahren der eingangs genannten Art, umfassend zumindest ein fahrerloses Transportfahrzeug mit einer Palette zur Aufnahme und zum Transport von Waren durch das Warenlager in Form eines Stapels und zumindest eine von einem Kommissionierer tragbare mobile Einheit mit einer optischen Anzeigeeinrichtung.

Bei der Kommissionierung von Waren in einem Warenlager wird grundsätzlich zwischen einer manuellen, halbmanuellen und automatischen Kommissionierung unterschieden. Welche dieser Kommissionierarten zum Einsatz kommt, hängt vornehmlich von einer Kosten-Nutzen-Analyse ab. Vollautomatische Kommissioniersysteme kommen zwar ohne manuelle Eingriffe durch Kommissionierer bzw. Personen aus, sind allerdings in der Errichtung bzw. Anschaffung äußerst kostenintensiv. Neben halbmanuellen Kommissioniersystemen, bei welchen eine Teilautomatisierung gegeben ist, sind nach wie vor trotz der Personalkosten manuelle Kommissioniersysteme im Einsatz. Ausschließlich manuelle Kommissioniersysteme erweisen sich je nach zu kommissionierenden Waren bzw. Warenlager als deutlich kostengünstiger als automatiserte oder halbmanuelle bzw. halbautomatisierte Systeme, aufgrund eines menschlichen Einsatzes kann jedoch eine Fehlerrate beim Kommissionieren hoch sein.

In größeren Warenlagern für eine manuelle Kommissionierung von Waren ist in der Regel nicht nur ein Kommissionierer, sondern auch zumindest ein Transportfahrzeug zur Aufnahme und zum Transport von Waren durch das Warenlager erforderlich. Das oder die Transportfahrzeuge werden in der Regel vom Kommissionierer bedient und sind somit nicht fahrerlos. Es sind allerdings auch fahrerlose Transportfahrzeuge bekannt geworden, die automatisiert bzw. ohne menschliche Betätigung ein Warenlager abfahren können (siehe z. B. WO 2011/085426 A1 oder DE 10 2004 001 198A1).

Bekannt ist es auch aus der manuellen Kommissionierung, dass "Augmented Reality" (AR) in Bezug auf Anweisungen für einen Kommissionierer Anwendung finden kann. AR verschmilzt quasi die Realität mit durch eine Datenverarbeitungsanlage bzw. einen Rechner übermittelte Daten, wobei die vom Rechner übermittelten Daten für den Kommissionierer mit einem Abbild der Realität überlagert werden. Üblicherweise wird dies mit einem sogenannten Head-Mounted-Display (HMD) realisiert, wobei der Kommissionierer durch eine vor einem Auge befindliche, halbtransparente Brille einerseits die Umgebung des Warenlagers sieht, andererseits aber in der Brille beispielsweise zu kommissionierende Waren in einem bestimmten Regal des Warenlagers signalisiert werden. Dies erleichtert die Auffindbarkeit bestimmter zu kommissionierender Waren. Dabei kann vorgesehen sein, dass ein Kommissionierer wegoptimiert, also entlang kürzester Strecken, zu einer zu kommissionierenden Ware geführt wird (EP 2 161 219 A1). Der Kommissionierer führt dabei einen zu beladenden fahrbaren Warenkorb mit sich.

Bei der manuellen Kommissionierung von Waren in einem größeren Warenlager wird oftmals eine Vielzahl von Artikeln auf Paletten gestapelt und so für einen weiteren Transport vorbereitet. Bei solchen Anforderungsprofilen an eine Kommissionierung ist es zwingend notwendig, größere Transportfahrzeuge für die Kommissionierung zur Verfügung zu stellen, welche die beladenen Paletten verfahren können. Gleichzeitig ist eine manuelle Beladung der Paletten durch einen oder mehrere Kommissionierer erforderlich. Bei bekannten Systemen besteht diesbezüglich aber der Nachteil, dass die Kommissionierung zeitaufwendig ist, weil der Kommissionierer auch das Transportfahrzeug bedienen bzw. mit diesen fahren muss.

Aufgabe der Erfindung ist es, ein Verfahren anzugeben, mit dem in einem großen Warenlager bzw. Warenhaus Waren rasch und effektiv kommissioniert werden können.

Des Weiteren ist es ein Ziel der Erfindung, eine Vorrichtung anzugeben, die sich zur Durchführung des Verfahrens eignet.

Die Aufgabe wird mit einem Verfahren gemäß Anspruch 1 gelöst. Hierbei werden bei einem Verfahren der eingangs genannten Art von zumindest einer Datenverarbeitungsanlage Koordinationsdaten für die jeweils nächste zu kommissionierende Ware der zumindest einen Auftragsliste sowohl an das zumindest eine Transportfahrzeug als auch an die zumindest eine mobile Einheit übermittelt, um eine Ware zu kommissionieren.

Das Konzept der Erfindung beruht auf der Überlegung, das oder die Transportfahrzeuge einerseits und einen oder mehrere Kommissionierer andererseits getrennt durch das Warenlager zu navigieren bzw. zu führen, sodass sich das Transportfahrzeug und der oder die Kommissionierer bei der Abarbeitung einer Auftragsliste für zu kommissionierende Waren unabhängig voneinander jeweils an der Position der nächsten zu kommissionierenden Ware einfinden. Aufgrund der Unabhängigkeit der Navigation des oder der fahrerlosen Transportfahrzeuge und des oder der Kommissionierer ist es auch einfach möglich, verschiedene Abschnitte im Warenlager zu bilden, die jeweils von einem Kommissionierer besetzt sind. Die Kommissionierer haben dann zur Kommissionierung von Waren in ihren Abschnitten nur kurze Laufwege, was die Effizienz erhöht. Auf der anderen Seite können die fahrerlosen Transportfahrzeuge abschnittsübergreifend verfahren werden und so quasi von einem Kommissionierer dem nächsten übergeben werden. In einem solchen Fall kommt ein in der Regel bereits teilweise beladenes Transportfahrzeug an jene Stelle in einem anderen Abschnitt, wo die nächste Ware z. B. auf die vom Transportfahrzeug geführte Palette zu stapeln ist. Der in diesem Abschnitt tätige Kommissionierer, der zuvor auf ein anderes fahrerloses Transportfahrzeug geladen hat, kommt unabhängig vom aktuellen Transportfahrzeug ebenfalls zu dieser Stelle und lädt die zu kommissionierende Ware auf. Die manuelle Kommissionierung ist in dieser Weise hocheffizient, weil einerseits für die Kommissionierer kurze Wege gegeben sind und andererseits die Transportfahrzeuge fahrerlos navigieren.

Bevorzugt ist vorgesehen, dass die Koordinaten des Warenlagers als Referenzdaten in der zumindest einen Datenverarbeitungsanlage und/oder dem zumindest einen Transportfahrzeug hinterlegt und im Warenlager erste Markierungen vorgesehen werden, anhand welcher ein oder mehrere Transportfahrzeuge durch Erkennen der Markierungen und wiederholten Abgleich der aktuellen Koordinaten (Ist-Position) des jeweiligen Transportfahrzeuges mit den in der Datenverarbeitungsanlage und/oder im Transportfahrzeug hinterlegten Referenzdaten des Warenlagers automatisch zu einer Zielposition (Soll-Position) für die Kommissionierung der nächsten Ware verfahren werden. Durch einen wiederholten bzw. zyklischen Abgleich der aktuellen Koordinaten mit den Koordinaten des Warenlagers, die als digitale Karte eine Referenz für die Fahrwege des oder der Transportfahrzeuge bilden, kann eine Wegoptimierung bezüglich der Fahrwege des oder der Transportfahrzeuge erfolgen. Darüber hinaus ist auch eine Koordination mehrerer Transportfahrzeuge möglich, ohne dass diese aneinanderstoßen. Ist die Zielposition erreicht, wird die Ware kommissioniert und die Kommissionierung bestätigt. Das Transportfahrzeug kann dann zur nächsten Zielposition verfahren werden.

Es ist zweckmäßig, dass die ersten Markierungen durch im Warenlager fixiert angeordnete Reflektoren gebildet werden und das zumindest eine Transportfahrzeug mit zumindest einem Sensor ausgestattet ist, mit welchen die Reflektoren erkannt werden, wonach anhand der Erkennung eine Position des zumindest einen Transportfahrzeuges berechnet wird. Bei den Sensoren kann es sich insbesondere um optische Sensoren handeln, die Licht aussenden, das von den Reflektoren zu den Sensoren zurückgeworfen wird. Die ersten Markierungen können beispielsweise am Boden oder der Decke befestigt sein. Besonders zweckmäßig ist es jedoch, wenn die Reflektoren an seitlichen Wänden und/oder Regalsystemen des Warenlagers befestigt sind, beispielsweise als längliche, reflektierende Streifen, die vorzugsweise vertikal positioniert sind. Die fahrerlosen Transportfahrzeuge senden dann über den Sensor beispielsweise Laserlicht aus, das von den Reflektoren zum jeweiligen Sensor zurückgeworfen wird. Aus den Winkeln und der Reflexionszeit sowie gegebenenfalls weiteren Parametern wie einer Fahrgeschwindigkeit kann die aktuelle Position jedes Transportfahrzeuges im Koordinatensystem des Warenlagers bestimmt werden.

Bevorzugt ist es des Weiteren, dass der zumindest eine Kommissionierer durch Wegweiser auf der Anzeigeeinrichtung unter wiederholtem Abgleich der Koordinaten des Kommissionierers mit in der Datenverarbeitungsanlage hinterlegten Referenzdaten des Warenlagers wegoptimiert zu einer Zielposition für die Kommissionierung der nächsten Ware geführt wird. Somit können fahrerlose Transportfahrzeuge und Kommissionierer jeweils wegoptimiert, also jeweils entlang des kürzesten Weges, zur nächsten zu kommissionierenden Ware bzw. einer Zielposition gebracht werden. Zweckmäßig ist es dabei, dass im Warenlager zweite Markierungen vorgesehen werden und der zumindest eine Kommissionierer mit einer optosensorischen Erfassungseinheit ausgestattet ist, anhand welcher die zweiten Markierungen automatisch erkannt werden. Zweckmäßigerweise ist die optosensorische Erfassungseinheit Teil der tragbaren mobilen Einheit. Bei den zweiten Markierungen handelt es sich in der Regel um Barcodes oder Quick-Response-Codes (QR-Codes). Die optosensorische Erfassungseinheit, beispielsweise eine Kamera, erfasst während der Navigation des Kommissionierers die zweiten Markierungen wie Barcodes und übergibt diese Bilder drahtlos der zentralen Datenverarbeitungsanlage, in welcher aus dem oder den Abbilden der z. B. übermittelten Barcodes und deren Verzerrungen eine aktuelle Position im Koordinatensystem des Warenlagers berechnet wird. Durch zyklischen Abgleich der aktuellen, berechneten Position mit einer Zielposition können dem Kommissionierer auf der Anzeigeeinrichtung Wegweiser eingeblendet werden, die den Kommissionierer wegoptimiert zur nächsten Zielposition führen. Sobald dort die zu kommissionierende Ware kommissioniert worden ist und der Kommissioniervorgang der Datenverarbeitungsanlage als durchgeführt bestätigt worden ist, erfolgt die Navigation in analoger Weise zur nächsten Zielposition bis die Aufträge abgearbeitet sind.

Bei dem erfindungsgemäßen Verfahren ist zumindest ein Algorithmus zur Berechnung eines Packbildes am Transportfahrzeug vorgesehen, das für die jeweils zu kommissionierende Ware auf der Anzeigeeinrichtung dargestellt wird. Vorzugsweise arbeitet der Kommissionierer mit einem HMD, das eine halbtransparente Brille umfasst, in welcher Daten wie zum Beispiel das berechnete Packbild eingeblendet werden können. Dadurch ist es neben der schnellen Kommissionierung auch möglich, dass auf einer Basis wie einer Palette, die von einem fahrerlosen Transportfahrzeug geführt wird, ein optimierter Stapel von Waren gebildet wird. Die Bildung einer stabilen Palette ist oftmals mit großen Schwierigkeiten verbunden, die durch Berechnung eines Packbildes und dessen Anzeige behoben werden können. Insbesondere ist es möglich, dass unerfahrene Kommissionierer oder Picker eine stabile Palette bilden. Darüber hinaus ist für neue Mitarbeiter eine Anlernzeit gering. Im Idealfall lassen sich dadurch bei hoher Pick-Qualität fehlerfreie manuelle Kommissioniervorgänge realisieren. Dies war bisher kaum möglich. Bislang hat man sich oftmals damit beholfen, wenn eine Palette instabil war, diese mit Cellophan zu umwickeln, was allerdings nicht immer die notwendige Palettenstabilität sicherstellen konnte. Vielmehr fielen Stapel auf Paletten bereits am Ausgang des Warenlagers wieder um. Derartige Probleme sind nunmehr vermeidbar.

Wird ein Packbild berechnet und auf der Anzeigeeinrichtung dargestellt, ist an zumindest einem Transportfahrzeug eine Aufnahmeeinrichtung vorgesehen, mit welcher die Anordnung der Waren am Transportfahrzeug aufgenommen wird. Dies dient der Qualitätssteigerung. Durch die Aufnahme des real vorliegenden Stapels kann ein Vergleich mit dem berechneten, optimierten Packbild durchgeführt werden. Stimmt das berechnete Packbild nicht mit dem realen Stapel überein, kann korrigierend eingegriffen werden. Diesbezüglich kann vorgesehen sein, dass an den Kommissionierer ein Signal und/oder eine Nachricht ausgegeben wird, wenn das berechnete Packbild beim Stapeln nicht realisiert wird.

Es kann grundsätzlich nicht ausgeschlossen werden, dass der Kommissionierer bzw. Picker trotz erfolgter Anzeige das berechnete, optimierte Packbild nicht realisiert. Ferner ist vorgesehen, dass nach dem Stapeln einer Ware ein Vergleich des berechneten Packbildes mit der aufgenommenen Anordnung der Waren erfolgt und für die nächste zu kommissionierende Ware ein neues optimiertes Packbild berechnet wird, wenn die Anordnung der Waren im Vergleich mit dem berechneten Packbild abweicht. Dadurch ist es möglich, noch stabile Stapel bzw. Paletten zu bilden, auch wenn im Zuge des Beladens der Palette ein Stapelfehler auftritt.

Die Vorzüge des erfindungsgemäßen Verfahrens kommen insbesondere auch zum Zug, wenn wie erwähnt das Warenlager in mehrere Abschnitte unterteilt wird, in welchen jeweils ein Kommissionierer tätig wird, und zumindest ein Transportfahrzeug vorgesehen ist, auf das in verschiedenen Abschnitten Ware gestapelt wird.

Als fahrerloses Transportfahrzeug wird in der Regel ein Gabelstapler eingesetzt, wobei die Waren auf eine Palette gestapelt werden, welche der Gabelstapler führt.

Das weitere Ziel der Erfindung wird mit einer Vorrichtung gemäß Anspruch 9 erreicht. Bei einer erfindungsgemäßen Vorrichtung ist zumindest eine Datenverarbeitungsanlage vorgesehen, welche Koordinationsdaten für die jeweils nächste zu kommissionierende Ware der zumindest einen Auftragsliste sowohl an das zumindest eine Transportfahrzeug als auch zumindest eine mobile Einheit übermittelt, um die nächste Ware zu kommissionieren, wobei zumindest ein Algorithmus zur Berechnung eines Packbildes am Transportfahrzeug vorgesehen ist, das für die jeweils zu kommissionierende Ware auf der Anzeigeeinrichtung dargestellt wird, wobei am zumindest einen Transportfahrzeug eine Aufnahmeeinrichtung vorgesehen ist, mit welcher die Anordnung der Waren am Transportfahrzeug aufgenommen wird und nach dem Stapeln einer Ware ein Vergleich des berechneten Packbildes mit der aufgenommen Anordnung der Waren erfolgt und für die nächste zu kommissionierende Ware ein neues optimiertes Packbild berechnet wird, wenn die Anordnung der Waren im Vergleich mit dem berechneten Packbild abweicht. Mit einer entsprechenden Vorrichtung bzw. Anordnung von Komponenten kann eine effektive und rasche Kommissionierung von Waren erreicht werden

Es ist von Vorteil, wenn in der Datenverarbeitungsanlage und/oder im Transportfahrzeug eine digitale Karte des Warenlagers hinterlegt ist und das zumindest eine fahrerlose Transportfahrzeug einen oder mehrere Sensoren aufweist, mit welchen anhand von ersten Markierungen im Warenlager aktuelle Koordinaten des Transportfahrzeuges ermittelbar sind, sodass das Transportfahrzeug durch wiederholten Abgleich der aktuellen Koordinaten des jeweiligen Transportfahrzeuges mit der Datenverarbeitungsanlage und/oder den im Transportfahrzeug hinterlegten Referenzdaten des Warenlagers automatisch zu einer Zielposition für die Kommissionierung der nächsten Ware verfahrbar ist. Das oder die Transportfahrzeuge werden dann über die Datenverarbeitungsanlage gesteuert jeweils zu einer Zielposition verfahren, ohne dass sich einzelne Transportfahrzeuge in die Quere kommen. Darüber hinaus ist auch eine Wegoptimierung möglich, sodass die Transportfahrzeuge kürzeste Wege zurücklegen, um zur nächsten Zielposition zu gelangen.

In ähnlicher Weise ist es von Vorteil, wenn die mobile Einheit mit der Datenverarbeitungsanlage drahtlos verbunden ist und ein wiederholter Abgleich der Koordinaten des Kommissionierers mit in der Datenverarbeitungsanlage hinterlegten Referenzdaten des Warenlagers erfolgt, um den Kommissionierer durch Wegeweiser auf der Anzeigeeinrichtung wegoptimiert zu einer Zielposition für die Kommissionierung der nächsten Ware zu führen.

Die Bildung stabiler Paletten auch durch unerfahrene oder neue Mitarbeiter lässt sich erreichen, wenn zumindest ein Algorithmus zur Berechnung eines Packbildes am Transportfahrzeug vorgesehen ist, das für eine zu kommissionierende Ware auf der optischen Anzeigeeinrichtung darstellbar ist. Dadurch kann dem Kommissionierer dargestellt werden, an welcher Position des Stapels, z. B. einer Palette auf einem Gabelstapler, die nächste Ware abzulegen und wie diese zu positionieren ist.

Weitere Merkmale, Vorteile und Wirkungen ergeben sich anhand des nachstehend dargestellten Ausführungsbeispiels. In den Zeichnungen, auf welche dabei Bezug genommen wird, zeigen:
Fig. 1 ein fahrerloses Transportfahrzeug;
Fig. 2 eine mobile Einheit, die von einem Kommissionierer tragbar ist;
Fig. 3 eine schematische Darstellung eines Warenlagers;
Fig. 4 eine schematische Darstellung von Verfahrensabläufen;
Fig. 5 eine Ansicht während eines Kommissioniervorganges.

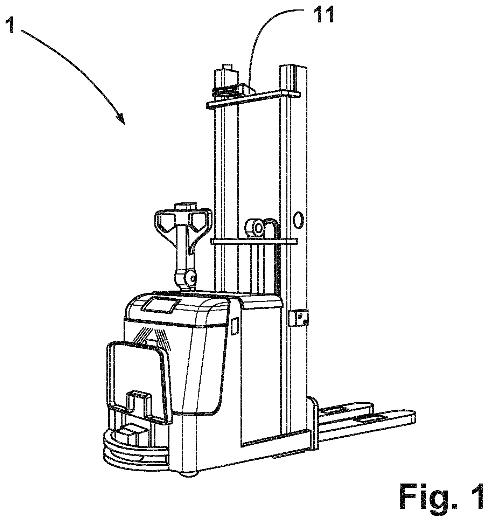

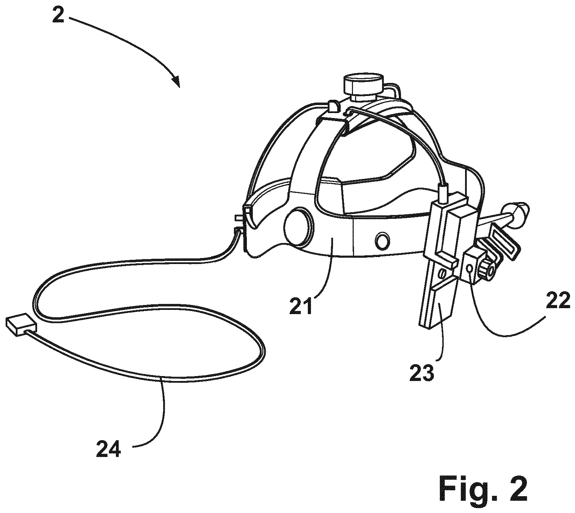

In Fig. 1 und 2 sind zwei Komponenten dargestellt, die bei der Durchführung eines erfindungsgemäßen Verfahrens Anwendung finden und Teil einer entsprechenden Vorrichtung sind. In Fig. 1 ist ein fahrerloses Transportfahrzeug 1 dargestellt. Im Rahmen der Erfindung können beliebige fahrerlose Transportfahrzeuge 1 eingesetzt werden, die automatisiert, also ohne manuelle Betätigung, verfahrbar sind. Zweckmäßigerweise kommt jedoch ein fahrerloses Transportfahrzeug 1 zum Einsatz, wie dieses in Fig. 1 dargestellt ist. Im Konkreten können Gabelstapler eingesetzt werden, die in der Lage sind, auch schwer beladene Paletten ohne Weiteres zu verfahren. Das in Fig. 1 dargestellte Transportfahrzeug 1 ist mit einem Computer ausgestattet und so adaptiert, dass eine drahtlose Kommunikation mit einer zentralen Datenverarbeitungsanlage 3 möglich ist. Am Kopf des fahrerlosen Transportfahrzeuges 1 ist ein Sensor 11 vorgesehen, der mit Laserlicht arbeitet. Mithilfe des Sensors kann in noch zu erläuternder Weise eine Bestimmung der aktuellen Position des fahrerlosen Transportfahrzeuges 1 im Koordinatensystem eines Warenlagers 4 bzw. eines Warenhauses erfolgen.

In Fig. 2 ist eine mobile Einheit 2 dargestellt, die von einem Kommissionierer am Kopf getragen werden kann. Dabei handelt es sich um ein HMD. Das HMD umfasst neben einer Trageinheit 21 insbesondere eine Kamera 22 sowie eine halbtransparente Datenbrille 23, die wie dargestellt nur für ein Auge ausgelegt sein kann. Des Weiteren umfasst die mobile Einheit 2 ein Kabel 24, mit welchem Verbindung zu einem Computer herstellbar ist. Der Computer befindet sich üblicherweise in einer Weste, die von einem Kommissionierer bzw. Picker am Körper getragen wird. Ähnlich wie das in Fig. 1 dargestellte fahrerlose Transportfahrzeug 1 kann die mobile Einheit 2 über den in der Weste vorgesehenen Computer drahtlos mit der zentralen Datenverarbeitungsanlage 3 kommunizieren. Insbesondere umfasst die Kommunikation die Bestimmung der aktuellen Position des Kommissionierers sowie die Einblendung bestimmter Befehle oder Informationen in der Datenbrille 23.

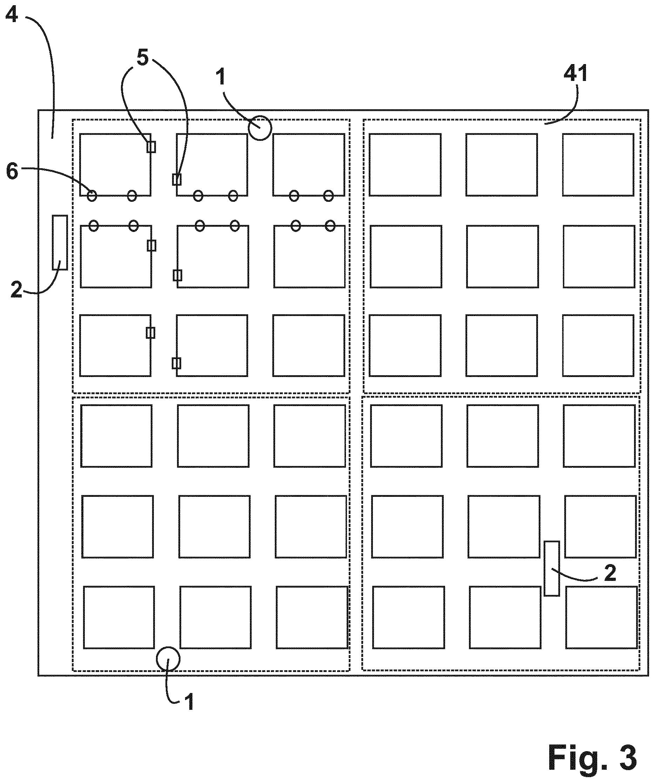

In Fig. 3 ist ein Warenlager 4 bzw. Warenhaus stark schematisiert dargestellt. Das Warenlager umfasst eine Vielzahl von Regalen, in welchen Waren gelagert sind. An den Regalen und/oder Wänden sind erste Markierungen 5 in Form von Reflektoren vorgesehen. Diese Reflektoren werfen Laserlicht, das von den Sensoren 11 der fahrerlosen Transportfahrzeuge 1 ausgesendet wird, zu diesen zurück. Aus Parametern wie den Winkeln des eingestrahlten und reflektierten Lichtes sowie Reflexionszeit können die aktuellen Koordinaten eines fahrerlosen Transportfahrzeuges 1 in Bezug auf das Koordinatensystem des Warenlagers 4 berechnet werden. Zu diesem Zweck sind die Reflektoren an bestimmten Positionen der Regale und/oder Wände positioniert. Es ist aber grundsätzlich auch möglich, dass alternativ oder ergänzend Reflektoren am Boden und/oder an der Decke vorgesehen sind. Die Navigation der einzelnen fahrerlosen Transportfahrzeuge 1 zu einer Zielposition für eine zu kommissionierende Ware erfolgt auf Basis des Wechselspiels zwischen Sensor 11 und Reflektoren, wobei auch ein wiederholter Abgleich mit der zentralen Datenverarbeitungsanlage 3 vorgesehen sein kann. Das Warenlager 4 kann wie dargestellt in mehrere Abschnitte 41 unterteilt sein, wobei in jedem Abschnitt 41 ein Kommissionierer tätig ist. Dadurch sind für die einzelnen Kommissionierer nur kurze Laufwege zurückzulegen. Die Transportfahrzeuge 1 hingegen können abschnittsübergreifend verfahren werden. In den einzelnen Abschnitten navigieren die Kommissionierer mit ihrem HMD, wobei der jeweilige Kommissionierer durch im HMD oder gegebenenfalls einer anderen Anzeigeeinrichtung eingeblendete Wegweiser, insbesondere Richtungsweiser, zu einer Zielposition für die nächste zu kommissionierende Waren geleitet wird. Dabei erfolgt ein wiederholter bzw. zyklischer Abgleich der aktuellen Koordinaten des Kommissionierers mit dem in der Datenverarbeitungsanlage hinterlegten Koordinatensystem des Warenlagers 4, sodass der Kommissionierer weg- und damit auch zeitoptimiert zur nächsten Zielposition geleitet wird. Hierfür sind zweite Markierungen 6 vorgesehen, z. B. Barcodes oder QR-Codes, die von der Kamera 22 am HMD erfasst und in der Datenverarbeitungsanlage 3 zur Positionsbestimmung verarbeitet werden.

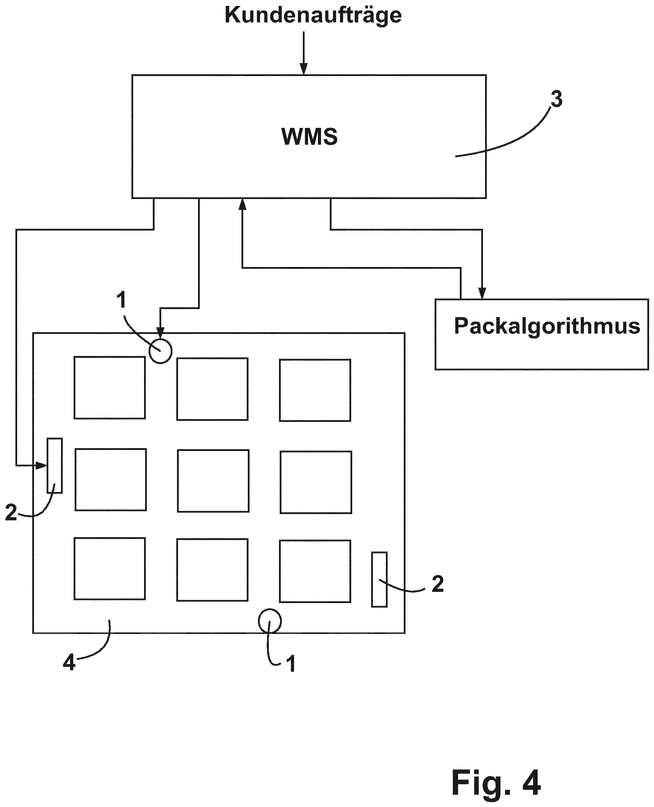

In Fig. 4 ist eine vereinfachte Darstellung der Abwicklung von Aufträgen dargestellt. Ein Warenmanagementsystem (WMS) koordiniert diverse Kundenaufträge. Zu diesem Zweck werden Aufträge generiert, z. B. für Lieferungen für diverse Filialen im Lebensmittelhandel. Die entsprechenden Aufträge werden anschließend mit einem Packalgorithmus bearbeitet. Durch den Packalgorithmus wird sichergestellt, dass auf einer Palette, die beispielsweise in eine bestimmte Filiale zu liefern ist, ein stabiler Stapel von Waren bzw. eine stabile Palette gebildet wird. Berücksichtigt dabei werden hinsichtlich der einzelnen aufzustapelnden Waren bzw. Pakete oder Schachteln diverse Artikeleigenschaften. Hierzu zählen Abmessungen in Länge, Breite und Höhe, Gewicht, Kippbarkeit, Ausrichtung eines Paketes nach oben oder unten und/oder Zuordnung zu einer bestimmten Warengruppe. Bestimmte Produktanordnungen beim Kunden können dabei ebenfalls berücksichtigt werden, sodass sich beim Entladen der Palette eine Optimierung erzielen lässt und die Stapelung der Waren beispielsweise einem Abbild der Anordnung der Waren in einer Filiale entspricht. Der Packbildalgorithmus dient vornehmlich dazu, eine stabile Palette zu bilden, wobei als Palette die Palette an sich mit den darauf gestapelten Waren zu verstehen ist. Darüber hinaus optimiert der Packalgorithmus in Bezug auf eine hohe Dichte der Palette. Vom Packalgorithmus wird das optimierte bzw. berechnete Packbild dem WMS retourniert. Aus dem WMS wiederum werden die einzelnen Aufträge an die fahrerlosen Transportfahrzeuge 1 einerseits und die Kommissionierer andererseits übermittelt.

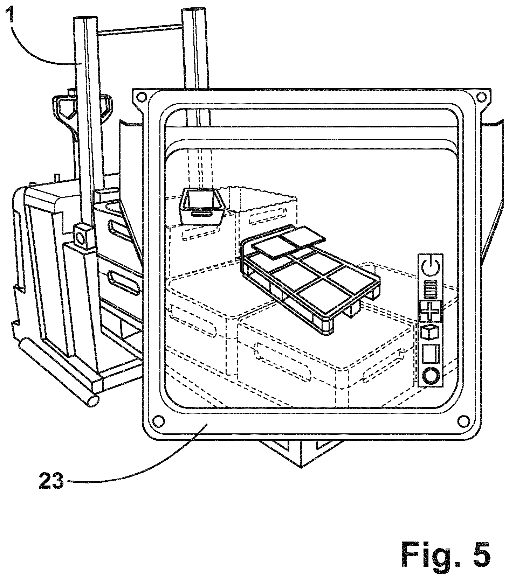

Sind einzelne Aufträge an die fahrerlosen Transportfahrzeuge 1 und die Kommissionierer übermittelt, werden diese für die jeweils nächste zu kommissionierende Ware durch das Warenlager 4 geführt. Die Navigation erfolgt wie erläutert für die fahrerlosen Transportfahrzeuge 1 anhand bzw. mithilfe der ersten Markierungen 5, jene der Kommissionierer mit den zweiten Markierungen 6. Haben für eine bestimmte zu kommissionierende Ware ein Transportfahrzeug und der Kommissionierer jeweils die Zielposition erreicht, werden dem Kommissionierer über das HMD bzw. die Datenbrille 23 Informationen eingeblendet, welche Ware aus dem Regal zu entnehmen ist. Die Ware ist in der Regel mit einer Kennzeichnung versehen, wie einem Barcode oder einem QR-Code, der ebenfalls von der Kamera 22 des HMD aufgenommen werden kann. Das entsprechende Bild wird der zentralen Datenverarbeitungsanlage 3 übermittelt, um die Korrektheit der entnommenen Ware zu überprüfen. Danach wird dem Kommissionierer wie in Fig. 5 dargestellt auf der Anzeigeeinrichtung bzw. Datenbrille 23 eingeblendet, an welcher Position gemäß dem Packalgorithmus zu stapeln ist. In Fig. 5 ist exemplarisch dargestellt, dass zwei Getränkekisten an einer hinteren Position der Palette anzuordnen sind. Sind die zwei Getränkekisten wie dargestellt an der hinteren Position abgelegt worden, stimmt das berechnete Packbild mit dem aktuellen Packbild bzw. der Anordnung der Waren auf der Palette korrekt überein. Der Kommissionierer kann dann den Pickvorgang abschließen. Der Kommissionierer wird dann zur nächsten Zielposition für die Entnahme einer Ware geführt, die mit der nächsten Zielposition des Transportfahrzeuges übereinstimmen kann, aber nicht muss.

Es kann zusätzlich vorgesehen sein, dass mit einer Kamera am fahrerlosen Transportfahrzeug 1 das realisierte Packbild mit dem optimierten verglichen wird, da nicht ausgeschlossen werden kann, dass trotz Einblendung des optimierten Packbildes eine Ware falsch abgelegt wird. Es kann dann durch einen Vergleich der Packbilder ein Fehler erkannt werden und gegebenenfalls der Kommissionierer durch ein Signal oder eine andere Nachricht hierüber in Kenntnis gesetzt werden. Denkbar ist es beispielsweise, dass der Pickvorgang erst bei korrektem Packbild abgeschlossen werden kann. Eine andere Möglichkeit besteht darin, den Pickvorgang zwar abzuschließen, aber im Anschluss aufgrund der fehlerhaften Ablage ein neues optimiertes Packbild zu berechnen.

## Patentansprüche

1. Verfahren zur Kommissionierung von Waren in einem Warenlager (4), wobei zumindest eine Auftragsliste abgearbeitet wird und wobei zumindest ein Kommissionierer mit einer tragbaren mobilen Einheit (2) mit einer optischen Anzeigeeinrichtung ausgestattet ist und vom zumindest einen Kommissionierer manuell Waren aus dem Warenlager (4) auf eine Palette zumindest eines fahrerlosen Transportfahrzeuges (1) in Form eines Stapels gestapelt werden, **dadurch gekennzeichnet, dass** von zumindest einer Datenverarbeitungsanlage (3) Koordinationsdaten für die jeweils nächste zu kommissionierende Ware der zumindest einen Auftragsliste sowohl an das zumindest eine Transportfahrzeug (1) als auch die zumindest eine mobile Einheit (2) übermittelt werden, um eine Ware zu kommissionieren, wobei zumindest ein Algorithmus zur Berechnung eines Packbildes am Transportfahrzeug (1) vorgesehen ist, das für die jeweils zu kommissionierende Ware auf der Anzeigeeinrichtung dargestellt wird, wobei am zumindest einen Transportfahrzeug (1) eine Aufnahmeeinrichtung vorgesehen ist, mit welcher die Anordnung der Waren am Transportfahrzeug aufgenommen wird und nach dem Stapeln einer Ware ein Vergleich des berechneten Packbildes mit der aufgenommen Anordnung der Waren erfolgt und für die nächste zu kommissionierende Ware ein neues optimiertes Packbild berechnet wird, wenn die Anordnung der Waren im Vergleich mit dem berechneten Packbild abweicht.

2. Verfahren nach Anspruch 1, **dadurch gekennzeichnet, dass** die Koordinaten des Warenlagers (4) als Referenzdaten in der zumindest einen Datenverarbeitungsanlage (3) und/oder dem zumindest einen Transportfahrzeug (1) hinterlegt und im Warenlager (4) erste Markierungen (5) vorgesehen werden, anhand welcher ein oder mehrere Transportfahrzeuge (1) durch Erkennen der Markierungen (5) und wiederholten Abgleich der aktuellen Koordinaten des jeweiligen Transportfahrzeuges (1) mit den in der Datenverarbeitungsanlage (3) und/oder im Transportfahrzeug (1) hinterlegten Referenzdaten des Warenlagers (4) automatisch zu einer Zielposition für die Kommissionierung der nächsten Ware verfahren werden.

3. Verfahren nach Anspruch 2, **dadurch gekennzeichnet, dass** die ersten Markierungen (5) durch im Warenlager fixiert angeordnete Reflektoren gebildet werden und das zumindest eine Transportfahrzeug (1) mit zumindest einem Sensor (11) ausgestattet ist, mit welchen die Reflektoren erkannt werden, wonach anhand der Erkennung eine Position des zumindest einen Transportfahrzeuges (1) berechnet wird.

4. Verfahren nach einem der Ansprüche 1 bis 3, **dadurch gekennzeichnet, dass** der zumindest eine Kommissionierer durch Wegweiser auf der Anzeigeeinrichtung unter wiederholtem Abgleich der Koordinaten des Kommissionierers mit in der Datenverarbeitungsanlage (3) hinterlegten Referenzdaten des Warenlagers (4) wegoptimiert zu einer Zielposition für die Kommissionierung der nächsten Ware geführt wird.

5. Verfahren nach Anspruch 4, **dadurch gekennzeichnet, dass** im Warenlager (4) zweite Markierungen (6) vorgesehen werden und der zumindest eine Kommisionierer mit einer optosensorischen Erfassungeinheit ausgestattet ist, anhand welcher die zweiten Markierungen (6) automatisch erkannt werden.

6. Verfahren nach Anspruch 1, **dadurch gekennzeichnet, dass** an den Kommissionierer ein Signal und/oder eine Nachricht ausgegeben wird, wenn das berechnete Packbild beim Stapeln nicht realisiert wird.

7. Verfahren nach einem der Ansprüche 1 bis 6, **dadurch gekennzeichnet, dass** das Warenlager (4) in mehrere Abschnitte (41) unterteilt wird, in welchen jeweils ein Kommissionierer tätig wird, und zumindest ein Transportfahrzeug (1) vorgesehen wird, auf das in verschiedenen Abschnitten (41) Ware gestapelt wird.

8. Verfahren nach einem der Ansprüche 1 bis 7, **dadurch gekennzeichnet, dass** als Transportfahrzeug (1) ein Gabelstapler eingesetzt wird und die Waren insbesondere auf eine Palette gestapelt werden.

9. Vorrichtung zur Kommissionierung von Waren in einem Warenlager (4) gemäß zumindest einer Auftragsliste zur Durchführung eines Verfahrens gemäß einem der Ansprüche 1 bis 8, umfassend zumindest ein fahrerloses Transportfahrzeug (1) mit einer Palette zur Aufnahme und zum Transport von Waren durch das Warenlager (4) in Form eines Stapels und zumindest eine von einem Kommissionierer tragbare mobile Einheit (2) mit einer optischen Anzeigeeinrichtung, **dadurch gekennzeichnet, dass** zumindest eine Datenverarbeitungsanlage (3) vorgesehen ist, welche Koordinationsdaten für die jeweils nächste zu kommissionierende Ware der zumindest einen Auftragsliste sowohl an das zumindest eine Transportfahrzeug (1) als auch zumindest eine mobile Einheit (2) übermittelt, um die nächste Ware zu kommissionieren, wobei zumindest ein Algorithmus zur Berechnung eines Packbildes am Transportfahrzeug (1) vorgesehen ist, das für die jeweils zu kommissionierende Ware auf der Anzeigeeinrichtung dargestellt wird, wobei am zumindest einen Transportfahrzeug (1) eine Aufnahmeeinrichtung vorgesehen ist, mit welcher die Anordnung der Waren am Transportfahrzeug aufgenommen wird und nach dem Stapeln einer Ware ein Vergleich des berechneten Packbildes mit der aufgenommen Anordnung der Waren erfolgt und für die nächste zu kommissionierende Ware ein neues optimiertes Packbild berechnet wird, wenn die Anordnung der Waren im Vergleich mit dem berechneten Packbild abweicht.

10. Vorrichtung nach Anspruch 9, **dadurch gekennzeichnet, dass** in der Datenverarbeitungsanlage (3) und/oder im Transportfahrzeug eine digitale Karte des Warenlagers hinterlegt ist und das zumindest eine fahrerlose Transportfahrzeug (1) einen oder mehrere Sensoren (11) aufweist, mit welchen anhand von ersten Markierungen (5) im Warenlager (4) aktuelle Koordinaten des Transportfahrzeuges (1) ermittelbar sind, sodass das Transportfahrzeug (1) durch wiederholten Abgleich der aktuellen Koordinaten des jeweiligen Transportfahrzeuges (1) mit der Datenverarbeitungsanlage (3) und/oder den im Transportfahrzeug (1) hinterlegten Referenzdaten des Warenlagers (4) automatisch zu einer Zielposition für die Kommissionierung der nächsten Ware verfahrbar ist.

11. Vorrichtung nach Anspruch 9 oder 10, **dadurch gekennzeichnet, dass** die mobile Einheit (2) mit der Datenverarbeitungsanlage (3) drahtlos verbunden ist und ein wiederholter Abgleich der Koordinaten des Kommissionieres mit in den Datenverarbeitungsanlage (3) hinterlegten Referenzdaten des Warenlagers (4) erfolgt, um den Kommissionierer durch Wegweiser auf der Anzeigeeinrichtung wegoptimiert zu einer Zielposition für die Kommissionierung der nächsten Ware zu führen.

12. Vorrichtung nach einem der Ansprüche 9 bis 11, **dadurch gekennzeichnet, dass** zumindest ein Algorithmus zur Berechnung eines Packbildes am Transportfahrzeug (1) vorgesehen ist, das für eine zu kommissionierende Ware auf der optischen Anzeigeeinrichtung darstellbar ist.

## Claims

1. A method for commissioning goods in a warehouse (4), wherein at least one order list is processed, and wherein at least one commissioner is equipped with a portable mobile unit (2) with an optical display device, and at least one commissioner manually stacks goods from the warehouse (4) onto a pallet of at least one driverless transport vehicle (1) in the form of a stack, **characterized in that** at least one data processing system (3) transmits coordination data for the respective good on the at least one order list to be commissioned next to both the at least one transport vehicle (1) and to the at least one mobile unit (2), so as to commission a good, wherein at least one algorithm is provided for calculating a packet image on the transport vehicle (1), which is displayed on the display device for the respective good to be commissioned, wherein a receiving device is provided on the at least one transport vehicle (1), which receives the arrangement of goods on the transport vehicle, and after a good has been stacked, a comparison between the calculated packing image and the received arrangement of goods is performed, and a new optimized packing image is calculated for the next good to be commissioned given a deviation in the arrangement of goods by comparison to the calculated packing image.

2. The method according to claim 1, **characterized in that** the coordinates of the warehouse (4) are stored as reference data in the at least one data processing system (3) and/or the at least one transport vehicle (1), and first markings (5) are provided in the warehouse (4), based on which one or several transport vehicles (1) are automatically moved to a target position for commissioning the next good by detecting the markings (5) and repeatedly adjusting the current coordinates of the respective transport vehicle (1) to the reference data of the warehouse (4) stored in the data processing system (3) and/or in the transport vehicle (1).

3. The method according to claim 2, **characterized in that** the first markings (5) are formed by reflectors fixedly arranged in the warehouse, and the at least one transport vehicle (1) is equipped with at least one sensor (11), with which the reflectors are detected, after which a position of the at least one transport vehicle (1) is calculated based on the detection.

4. The method according to one of claims 1 to 3, **characterized in that** the at least one commissioner is guided in a path-optimized manner to a target position for commissioning the next good by signposts on the display device, as the coordinates of the commissioner are repeatedly adjusted to reference data of the warehouse (4) stored in the data processing system (3).

5. The method according to claim 4, **characterized in that** second markings (6) are provided in the warehouse (4), and the at least one commissioner is equipped with an optosensory detection unit, based upon which the second markings (6) are automatically detected.

6. The method according to claim 1, **characterized in that** a signal and/or message is output to the commissioner if the calculated packing image is not realized while stacking.

7. The method according to one of claims 1 to 6, **characterized in that** the warehouse (4) is divided into several sections (41), in which a respective commissioner becomes active, and at least one transport vehicle (1) is provided, on which goods are stacked in different sections (41).

8. The method according to one of claims 1 to 7, **characterized in that** a forklift is used as the transport vehicle (1), and the goods are stacked in particular on a pallet.

9. A device for commissioning goods in a warehouse (4) according to at least one order list for implementing a method according to one of claims 1 to 8, comprising at least one driverless transport vehicle (1) with a pallet for receiving and transporting goods through the warehouse (4) in the form of a stack, and at least one mobile unit (2) that can be worn by a commissioner with an optical display unit, **characterized in that** at least one data processing system (3) is provided, which transmits coordination data for the respective good on the at least one order list to be commissioned next to both the at least one transport vehicle (1) and to at least one mobile unit (2), so as to commission the next good, wherein at least one algorithm is provided for calculating a packing image on the transport vehicle (1), which is displayed on the display device for the respective good to be commissioned, wherein a receiving device is provided on the at least one transport vehicle (1), which receives the arrangement of goods on the transport vehicle, and after a good has been stacked, a comparison between the calculated packing image and the received arrangement of goods is performed, and a new optimized packing image is calculated for the next good to be commissioned given a deviation in the arrangement of goods by comparison to the calculated packing image.

10. The device according to claim 9, **characterized in that** a digital map of the warehouse is stored in the data processing system (3) and/or in the transport vehicle, and the at least one driverless transport vehicle (1) has one or several sensors (11), with which current coordinates of the transport vehicle (1) can be determined based on first markings (5) in the warehouse (4), so that the transport vehicle (1) is automatically moved to a target position for commissioning the next good by repeatedly adjusting the current coordinates of the respective transport vehicle (1) to the reference data of the warehouse (4) stored in the data processing system (3) and/or in the transport vehicle (1).

11. The device according to claim 9 or 10, **characterized in that** the mobile unit (2) is wirelessly connected with the data processing system (3), and the coordinates of the commissioner are repeatedly adjusted to the reference data of the warehouse (4) stored in the data processing system (3), so as to guide the commissioner in a path-optimized manner to a target position for commissioning the next good by signposts on the display device.

12. The device according to one of claims 9 to 11, **characterized in that** at least one algorithm is provided for calculating a packing image on the transport vehicle (1), which can be displayed on the optical display device for a good to be commissioned.

## Revendications

1. Procédé de préparation des commandes de marchandises dans un entrepôt (4), sachant qu'au moins une liste de commandes est traitée et sachant qu'au moins un chariot-élévateur de préparation des commandes avec une unité mobile pouvant être portée (2) est équipé d'un système d'affichage optique et des marchandises sont manuellement empilées à partir d'un entrepôt (4) sur une palette d'au moins un véhicule de transport sans chauffeur (1) sous la forme d'une pile par au moins un chariot-élévateur de préparation des commandes, **caractérisé en ce que** des données de coordonnées sont transmises par au moins une installation de traitement des données (3) pour la marchandise respectivement suivante à préparer en commandes d'au moins une liste de commandes tant à au moins un véhicule de transport (1) qu'à au moins une unité mobile (2) pour préparer les commandes d'une marchandise, sachant qu'au moins un algorithme est prévu pour le calcul d'une image d'emballage sur le véhicule de transport (1), qui est représentée sur le système d'affichage pour la marchandise respectivement à préparer en commandes, sachant que sur au moins un véhicule de transport (1), un système d'enregistrement est prévu avec lequel la mise en place des marchandises sur le véhicule de transport est enregistrée et une comparaison de l'image d'emballage calculée avec la mise en place enregistrée des marchandises a lieu après l'empilement d'une marchandise et une nouvelle image d'emballage optimisée est calculée pour la marchandise suivante à préparer en commandes, lorsque la mise en place des marchandises s'écarte en comparaison de l'image d'emballage calculée.

2. Procédé selon la revendication 1, **caractérisé en ce que** les coordonnées de l'entrepôt (4) sont consignées en tant que données de référence dans au moins une installation de traitement des données (3) et/ou au moins un véhicule de transport (1) et des premiers repères (5) sont prévus dans l'entrepôt (4) à l'aide desquels un ou plusieurs véhicules de transport (1) sont déplacés automatiquement vers une position cible pour la préparation des commandes de la marchandise suivante par identification des repères (5) et ajustement répété des coordonnées actuelles du véhicule de transport (1) respectif avec les données de référence de l'entrepôt (4) consignées dans l'installation de traitement des données (3) et/ou dans le véhicule de transport (1).

3. Procédé selon la revendication 2, **caractérisé en ce que** les premiers repères (5) sont formés par des réflecteurs disposés fixement dans l'entrepôt et au moins un véhicule de transport (1) est équipé d'au moins un capteur (11) avec lequel les réflecteurs sont identifiés, selon lesquels une position d'au moins un véhicule de transport (1) est calculée à l'aide de l'identification.

4. Procédé selon l'une quelconque des revendication 1 à 3, **caractérisé en ce qu'**au moins un chariot-élévateur de préparation des commandes est guidé avec optimisation du parcours vers une position cible pour la préparation des commandes de la marchandise suivante par des panneaux indicateurs sur le système d'affichage avec ajustement répété des coordonnées du chariot-élévateur de préparation des commandes avec les données de référence de l'entrepôt (4) consignées dans l'installation de traitement des données (3).

5. Procédé selon la revendication 4, **caractérisé en ce que** des deuxièmes repères (6) sont prévus dans l'entrepôt (4) et qu'au moins un chariot-élévateur de préparation des commandes est équipé d'une unité de saisie à détection optique à l'aide de laquelle les deuxièmes repères (6) sont automatiquement identifiés.

6. Procédé selon la revendication 1, **caractérisé en ce qu'**un signal et/ou une information est émis(e), lorsque l'image d'emballage calculée n'est pas réalisée lors de l'empilement.

7. Procédé selon l'une quelconque des revendications 1 à 6, **caractérisé en ce que** l'entrepôt (4) est divisé en plusieurs sections (41) dans lesquelles un chariot-élévateur de préparation des commandes est respectivement actif et au moins un véhicule de transport (1) est prévu sur lequel de la marchandise est empilée dans différentes sections (41).

8. Procédé selon l'une quelconque des revendications 1 à 7, **caractérisé en ce qu'**un chariot-élévateur à fourche est utilisé comme véhicule de transport (1) et les marchandises sont empilées en particulier sur une palette.

9. Dispositif de préparation des commandes de marchandises dans un entrepôt (4) selon au moins une liste de commandes pour exécuter un procédé selon l'une quelconque des revendications 1 à 8, comprenant au moins un véhicule de transport sans chauffeur (1) avec une palette pour l'enregistrement et le transport des marchandises à travers l'entrepôt (4) sous la forme d'une pile et au moins une unité mobile (2) avec un système d'affichage optique pouvant être portée par un chariot-élévateur de préparation des commandes, **caractérisé en ce qu'**au moins une installation de traitement des données (3) est prévue, laquelle transmet des données de coordination pour la marchandise respectivement suivante à préparer en commandes d'au moins une liste de commandes tant au moins à un véhicule de transport (1) qu'au moins à une unité mobile (2) pour préparer les commandes de la marchandise suivante, sachant qu'au moins un algorithme est prévu pour le calcul d'une image d'emballage sur le véhicule de transport (1), qui est représentée pour la marchandise respectivement à préparer en commandes sur le système d'affichage, sachant que sur au moins un véhicule de transport (1) est prévu un système d'enregistrement avec lequel la mise en place des marchandises sur le véhicule de transport est enregistrée et après l'empilement d'une marchandise une comparaison de l'image d'emballage calculée avec la mise en place enregistrée des marchandises a lieu et une nouvelle image d'emballage optimisée est calculée pour la marchandise suivante à préparer en commandes, lorsque la mise en place des marchandises s'écarte en comparaison de l'image d'emballage calculée.

10. Dispositif selon la revendication 9, **caractérisé en ce qu'**une carte numérique de l'entrepôt est consignée dans l'installation de traitement des données (3) et/ou dans le véhicule de transport et au moins un véhicule de transport sans chauffeur (1) comporte un ou plusieurs capteurs (11) avec lesquels les coordonnées actuelles du véhicule de transport (1) peuvent être déterminées à l'aide des premiers repères (5) dans l'entrepôt (4) de telle manière que le véhicule de transport (1) peut être déplacé automatiquement vers une position cible pour la préparation des commandes de la marchandise suivante par ajustement répété des coordonnées actuelles du véhicule de transport respectif (1) avec l'installation de traitement des données (3) et/ou les données de référence de l'entrepôt (4) consignées dans le véhicule de transport (1).

11. Dispositif selon la revendication 9 ou 10, **caractérisé en ce que** l'unité mobile (2) est reliée sans fil à l'installation de traitement des données (3) et un ajustement répété des coordonnées du chariot-élévateur de préparation des commandes avec les données de référence de l'entrepôt (4) consignées dans l'installation de traitement des données (3) a lieu pour guider le chariot-élévateur de préparation des commandes par poteau indicateur sur le système d'affichage avec optimisation de parcours vers une position cible pour la préparation des commandes de la marchandise suivante.

12. Dispositif selon l'une quelconque des revendications 9 à 11, **caractérisé en ce qu'**au moins un algorithme est prévu pour le calcul d'une image d'emballage sur le véhicule de transport (1), qui peut être représentée sur le système d'affichage optique pour une marchandise à préparer en commandes.
